# EUROPEAN PATENT APPLICATION

(11) **EP 4 458 505 A1**
(43) Date of publication of application: **06.11.2024**
(21) Application number: 22916519.6
(22) Date of filing: 08.12.2022
(51) Int. Cl.: B23K 26/062, B23K 26/03, H01M 4/04, B23K 26/21, B23K 26/06, B23K 101/36

(54) **PROCESSING APPARATUS AND METHOD, USING PLURALITY OF LASERS**

(30) Priority: 28.12.2021 KR 20210189472; 27.10.2022 KR 20220140708
(71) Applicant: Iti Co., Ltd., Gyeonggi-do 14118 (KR)
(72) Inventor: LEE, Seak Joon, Uiwang-si, Gyeonggi-do 16042 (KR)
(74) Representative: Cabinet Chaillot
(86) International application number: PCT/KR2022/019940
(87) International publication number: WO 2023/128373

(57) **Abstract**

Disclosed are a processing apparatus and method using a plurality of lasers. The processing apparatus using a plurality of lasers includes a plurality of laser generators that generate multiple laser beams, a plurality of beam modifiers that maintain a shape of each laser beam or modify the shape in real time, beam combiners that combine multiple laser beams modified by the plurality of beam modifiers, and a control unit that changes an irradiation condition of each laser beam based on a processing condition of an object to be processed to control driving of each laser generator and the beam modifier in real time, thereby irradiating laser beams having different wavelengths to a single object to be processed or an object to be processed in which the same or different materials are stacked to process the single object to be processed or the object to be processed.

## Description

### [Technical Field]

The present invention relates to a processing apparatus and method using a plurality of lasers, and more particularly, to a processing apparatus and method using a plurality of lasers for processing an object to be processed using a plurality of lasers having different wavelengths.

### [Background Art]

A secondary battery is a battery that can convert chemical energy into electrical energy to supply power to an external circuit, and when discharged, convert electrical energy into chemical energy by receiving external power to store electricity. There are various types of secondary batteries, including nickel-cadmium, lithium ion, nickel-hydrogen, lithium polymer, etc.

These secondary batteries are manufactured by forming a cathode and an anode by applying an active material to a surface of an electrode current collector, making an electrode assembly with a separator interposed therebetween, and then mounting the electrode assembly inside a cylindrical or prismatic metal can or a pouch-type case of aluminum laminated sheet, and mainly injecting or impregnating a liquid electrolyte into the electrode assembly, or using a solid electrolyte.

Therefore, the secondary batteries may be charged and discharged by allowing ions of the electrolyte injected between the cathode and anode insulated by the separator to move between the cathode and anode.

The electrodes used for the cathode and anode of these secondary batteries include an electrode body constituting the electrode and an electrode active material applied on the electrode body. The electrode body may generally be made by processing metal with excellent conductivity, such as aluminum (Al) or copper (Cu), into a sheet, thin plate, or foil form. The electrode film for forming the electrode assembly is manufactured in the form that an active material is applied to a portion of the electrode film and the electrode body is exposed to the remaining portion thereof. An exposed portion where the electrode body is exposed is processed to function as an electrode terminal for connecting the cathode and anode to the outside when configuring the electrode assembly (cathode, anode, and separator).

The electrode film goes through a cutting process to form terminal parts of the cathode and anode, and is then cut and divided into a length appropriate for a size of the electrode assembly. A notching device is used for this cutting operation of the electrode film.

The notching device is a device that forms the terminal part by cutting the electrode film, and cuts the exposed portion of the electrode film and a portion of the portion where the active material is applied using a press or a laser.

Conventionally, the notching device using punching has been mainly used, but recently, a device using a laser is being used for notching. The use of the notching device using a laser beam is increasing because damage to the electrode is less than that due to the punching and efficient production is possible.

For example, Patent Document 1 and Patent Document 2 below disclose a configuration of a laser notching device using a laser beam according to the related art.

Unlike the existing punching device, the laser notching device requires efficient work arrangement in consideration of a path of the laser beam, but the conventional laser notching device does not take this into consideration, resulting in a decrease in laser efficiency.

In addition, there are frequent cases where the laser beam is exposed to areas other than a work target, resulting in frequent breakdown of working machines, and an unnecessary increase in the costs of managing the breakdown.

In order to solve this problem, Patent Document 3 below discloses an electrode notching device configuration in which notching by a laser beam is performed by arranging the laser beam and the electrode film to be notched in a vertical movement manner.

Meanwhile, in the object to be processed such as the electrode film, an electrode layer is formed on one or both surfaces of the electrode film, making it difficult to simultaneously cut the electrode film and active layer using only a single-wavelength laser beam.

Accordingly, conventionally, multiple laser beams having different wavelengths had to be sequentially arranged to sequentially cut and process the active layer and electrode film, or the active layer, electrode film and active layer.

As a result, there were problems in that the workability of cutting work was deteriorated, the configuration of the laser processing apparatus became complicated, and the manufacturing cost increased.

Therefore, there is a need for the development of technology that can cut and process a single object to be processed, or an object to be processed in which different materials or the same material is stacked, such as an electrode film of a secondary battery, at once by irradiating laser beams having different wavelengths to the single object to be processed or the object to be processed.
(Patent Document 1) Korean Patent No. 10-1761973 (published on July 26, 2017)
(Patent Document 2) Korean Patent No. 10-1958881 (published on March 15, 2019)
(Patent Document 3) Korean Patent No. 10-2270797 (published on June 30, 2021)

### [Disclosure]

### [Technical Problem]

An object of the present invention is to solve the problems described above, and provide a processing apparatus and method using a plurality of lasers capable of processing an object to be processed having a single layer or an object to be processed stacked in multiple layers by irradiating a laser beam to the object to be processed.

Another object of the present invention is to provide a processing apparatus and method using a plurality of lasers capable of improving processing efficiency by lowering a laser beam reflectance and increasing an absorption rate of an object to be processed by irradiating laser beams having different wavelengths to a surface and an inside of the object to be processed.

### [Technical Solution]

To achieve the object as described above, a processing apparatus using a plurality of lasers according to the present invention, includes: a plurality of laser generators that generate multiple laser beams; a plurality of beam modifiers that maintain a shape of each laser beam or modify the shape in real time; beam combiners that combine multiple laser beams modified by the plurality of beam modifiers; and a control unit that changes an irradiation condition of each laser beam based on a processing condition of an object to be processed to control driving of each laser generator and the beam modifier in real time, wherein the processing condition includes a material of the object to be processed, the number of stacked layers, and result information of monitoring a processing state, the irradiation condition of the laser beams includes one or more of an on/off of each laser beam, an output and frequency of each laser beam, and a shape and focus position of each laser beam, the beam modifiers include one or more beam modifiers that modify each laser beam generated from the plurality of laser generators and separate beam modifiers that modify the laser beams combined by the beam combiner to combine the laser beams having a wavelength absorbed on the surface of the object to be processed and the laser beams having different wavelengths absorbed inside the object to be processed to have different diameters at the same center or at different centers, and irradiate the combined laser beams to the object to be processed and heat the surface and inside of the object to be processed to lower a reflectance of the laser beams and increase an absorption rate of the laser beams so as to process the object to be processed.

In addition, to achieve the objects as described above, a processing method using a plurality of lasers according to the present invention, includes: (a) setting, by a control unit, an irradiation condition of laser beams based on a processing condition of an object to be processed; (b) generating, by a plurality of laser generators, multiple laser beams; (c) modifying, by a plurality of beam modifiers, multiple laser beams; (d) combining, by beam combiners, the plurality of modified laser beams and irradiating the combined modified multiple laser beams to the object to be processed to process the object to be processed; and (e) monitoring, by the control unit, a processing state of the object to be processed, and changing the irradiation condition of the laser beam based on the monitoring result to process the object to be processed, wherein the processing condition includes a material of the object to be processed, the number of stacked layers, and result information of monitoring a processing state, and the irradiation condition of the laser beams includes one or more of an on/off of each laser beam, an output and frequency of each laser beam, and a shape and focus position of each laser beam to combine the laser beams having a wavelength absorbed on the surface of the object to be processed and the laser beams having different wavelengths absorbed inside the object to be processed to have different diameters at the same center or at different centers, and irradiate the combined laser beams to the object to be processed and heat the surface and inside of the object to be processed to lower a reflectance of the laser beams and increase an absorption rate of the laser beams so as to process the object to be processed.

### [Advantageous Effects]

As described above, according to a processing apparatus and method using a plurality of lasers according to the present invention, it is possible to process an object to be processed by irradiating laser beams having different wavelengths to the object to be processed.

In other words, according to the present invention, it is possible to process a single object to be processed or an object to be processed in which the same material or different materials are stacked by irradiating the objects to be processed with laser beams having different wavelengths capable of performing various types of processing such as welding, cutting, and patterning.

According to the present invention, by irradiating laser beams combined to have different diameters at the same center or different centers to simultaneously process a surface and inside of the object to be processed, it is possible to improve a processing speed and improve precision of a processed surface.

In addition, according to the present invention, by processing an object to be processed by radiating a surface and inside of the object to be processed with laser beams having different wavelengths to lower a laser beam reflectance and increase an absorption rate, it is possible to improve a processing speed and processing efficiency.

### [Description of Drawings]

FIG. 1 is a configuration diagram of a processing apparatus using a plurality of lasers according to a preferred embodiment of the present invention.
FIG. 2 is a diagram illustrating a state of processing an object to be processed using the processing apparatus shown in FIG. 1.
FIG. 3 is a graph illustrating an absorbance of a laser beam irradiated to an object to be processed.
FIG. 4 is a flowchart illustrating step by step a processing method of a processing apparatus using a plurality of lasers according to a preferred embodiment of the present invention.
FIG. 5 is an exemplary diagram of a configuration for overlap welding different materials.
FIG. 6 is a diagram illustrating results of overlap welding shown in FIG. 5.

### [Best Mode]

Hereinafter, a processing apparatus and method using a plurality of lasers according to a preferred embodiment of the present invention will be described in detail with reference to the attached drawings.

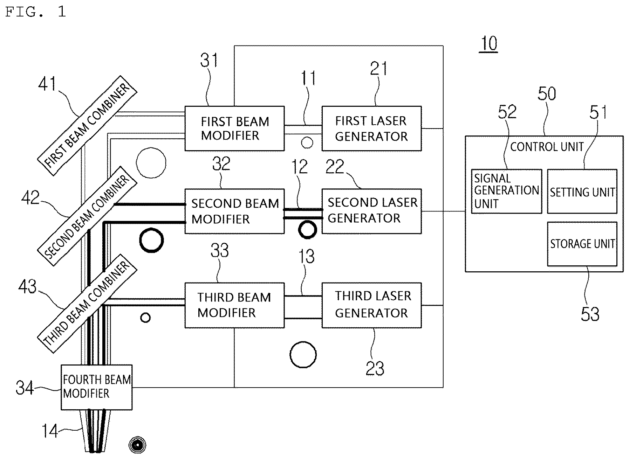

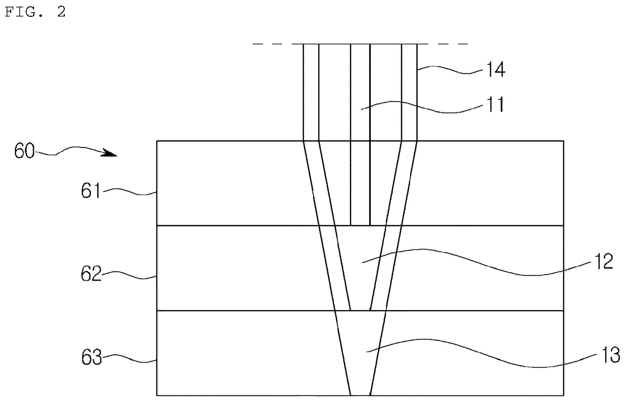

FIG. 1 is a configuration diagram of a processing apparatus using a plurality of lasers according to a preferred embodiment of the present invention, and FIG. 2 is a diagram illustrating a state of processing an object to be processed using the processing apparatus shown in FIG. 1.

Hereinafter, the terms indicating directions such as 'left', 'right', 'front', 'rear', 'up' and 'down' are defined as indicating each direction based on states shown in each drawing.

As illustrated in FIGS. 1 and 2, a processing apparatus 10 using a plurality of lasers according to a preferred embodiment of the present invention includes a plurality of laser generators 21 to 23 that generate multiple laser beams 11 to 13, a plurality of beam modifiers 31 to 34 that maintain or modify shapes of each laser beam 11 to 13 in real time, beam combiners 41 to 43 that combine the multiple laser beams 11 to 13 modified by each beam modifier 31 to 34, and a control unit 50 that controls driving of each laser generator 21 to 23 and beam modifiers 31 to 33 in real time by changing the irradiation conditions of each laser beam based on the processing conditions of the object 60 to be processed.

The processing conditions may include the material of the object 60 to be processed, the number of layers, and information on the results of monitoring the processing state of the object 60 to be processed using a camera or sensor.

For example, in the present embodiment, the configuration of the processing apparatus 10 that cuts and processes the object 60 to be processed in which different materials are stacked in three layers using three laser beams having different wavelengths will be described.

Of course, the present invention is not necessarily limited thereto, and may be modified to perform not only cutting process, but also various processes such as welding and patterning by irradiating a laser beam to the object to be processed.

In addition, it should be noted that the present invention may perform the cutting process on the objects 60 to be processed that are stacked in two or four or more pieces, and may change to use multiple laser beams, that is, two or more laser beams.

In the present embodiment, an electrode film of a secondary battery is described as being provided in a total of three layers with active layers stacked on both surfaces thereof.

In this way, when the object 60 to be processed is an electrode film in which three, that is, first to third layers 61 to 63 are stacked, three laser generators may be provided.

That is, the first to third laser generators 21 to 23 may each generate the first to third laser beams 11 to 13 having different wavelengths according to control signals from the control unit 50.

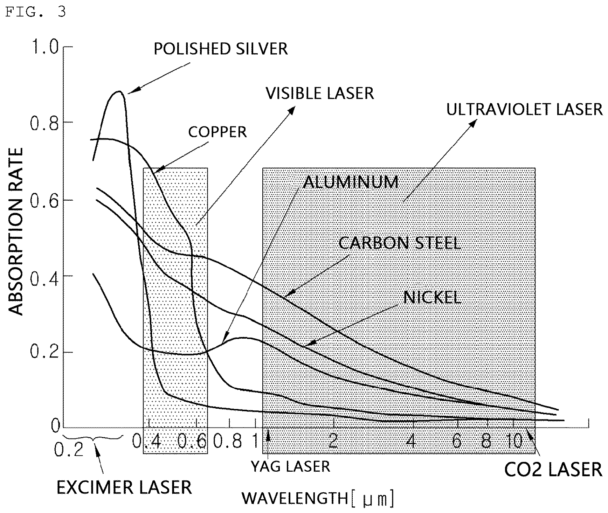

FIG. 3 is a graph illustrating an absorbance of a laser beam irradiated to an object to be processed.

As illustrated in FIG. 3, copper (Cu) constituting an electrode body in the electrode film shows an absorption rate of about 0.6 when the wavelength of the laser beam is about 0.5 µm. The absorption rate of copper drastically decreases when the wavelength of the laser beam becomes longer to about 0.6 µm or more.

On the other hand, aluminum (Al) applied to the electrode film shows a maximum absorption rate of about 0.2 or more when the wavelength of the laser beam is about 1 µm. The absorption rate of aluminum gradually decreases when the wavelength of the laser beam becomes shorter or longer than about 1 µm.

In this way, as the object 60 to be processed is composed of materials with different properties in terms of the absorption rate at which the laser beam irradiated to each layer 61 to 63 is absorbed, it is difficult to perform the cutting process using a single wavelength laser beam.

In order to solve this problem, in the present embodiment, the first to third laser generators 21 to 23 that generate the first to third laser beams 11 to 13 having a wavelength capable of processing each layer 61 to 63 are provided.

Therefore, the first to third laser beams 11 to 13 generated from the first to third laser generators 21 to 23 are transmitted to each of the first to third beam modifiers 31 to 33 through optical cables forming each movement path.

Each of the first to third beam modifiers 31 to 33 may modify one or more of the shape, size, and output of each laser beam 11 to 13 generated from the first to third laser generators 21 to 23 according to the control signal from the control unit 50.

For example, as illustrated in FIG. 1, the first beam modifier 31 may expand a diameter of the first laser beam 11 to be a preset first diameter, and modify a cross section of the first laser beam 11 into a roughly ring shape with an empty center.

The second beam modifier 32 may expand the diameter of the second laser beam 12 to a second diameter set smaller than the first diameter, and modify a cross-section of the second laser beam 12 into an approximately circular shape.

The third beam modifier 33 may reduce the diameter of the third laser beam 13 to a third diameter set smaller than the second diameter, and modify a cross-section of the third laser beam 13 into an approximately circular shape.

In this way, the first to third laser beams 11 to 13 modified in the first to third modifiers 31 to 33 may pass through the first to third beam combiners 41 to 43, respectively, and may be irradiated to the object 60 to be processed while being combined into a fourth laser beam 14 with different diameters at the same center.

Of course, the present invention is not necessarily limited thereto.

That is, the present invention may be modified to irradiate the laser beam by modifying the laser beam into not only a ring shape or a circular shape, but also an elliptical shape, a point, a straight line, or a curved shape.

In addition, the present invention may also be modified to arrange the same internal laser beam in the multiple laser beams at a position shifted to one side on an axis of an external laser beam.

In the case of performing overlap welding, when the internal laser beam is located behind the external laser beam and the relative transport direction of the object to be processed, a time difference occurs between upper and lower portions of a welding base material for the overlap welding.

Due to the time difference occurring at the upper and lower portions of the welding base material, the present invention may more effectively perform overlap welding on the welding base materials having different materials.

Here, the first beam combiner 41 may be provided as a reflective mirror that reflects the first laser beam.

Each of the second beam combiner 42 and the third combiner 43 may be provided as beam splitters that combine the laser beam transmitted from the upper portion and the laser beams transmitted from the beam transformers 32 and 33.

Meanwhile, the fourth beam modifier 34 that modifies one or more of the shape, size, and output of the fourth laser beam 14 may be further provided between the object 60 to be processed and the third beam combiner 43.

Therefore, as illustrated in FIG. 2, the fourth laser beam 14 may be irradiated to the first to third layers 61 to 63 of the object 60 to be processed, and sequentially perform the cutting processing on each layer.

The control unit 50 may be provided as a central processing unit that controls the driving of the plurality of laser generators 21 to 23 and the beam modifiers 31 to 34.

The control unit 50 may include a setting unit 51 that sets the irradiation conditions of each laser beam according to the processing conditions of the object 60 to be processed and changes and sets the processing state in real time according to the monitoring results, and a signal generation unit 52 that generates a control signal to control the driving of the first to third laser generators 21 to 23 and the beam modifiers 31 to 33 according to the irradiation conditions set in the setting unit 51.

In addition, the control unit 50 may further include a driving program that drives the processing apparatus 10 and a storage unit 53 that stores the irradiation conditions of the laser beam corresponding to the processing conditions of the object 60 to be processed.

Here, the irradiation conditions of the laser beam may include one or more of the on and off of each laser beam, the output and frequency of each laser beam, and the shape and focus position of each laser beam.

In this way, the present invention may perform the cutting process by irradiating laser beams having different wavelengths capable of cutting each layer to the object to be processed in which different materials are stacked.

The present invention may irradiate the laser beams combined to have different diameters at the same center to simultaneously process each layer forming the object to be processed, thereby improving the processing speed and improving the precision of the processed surface.

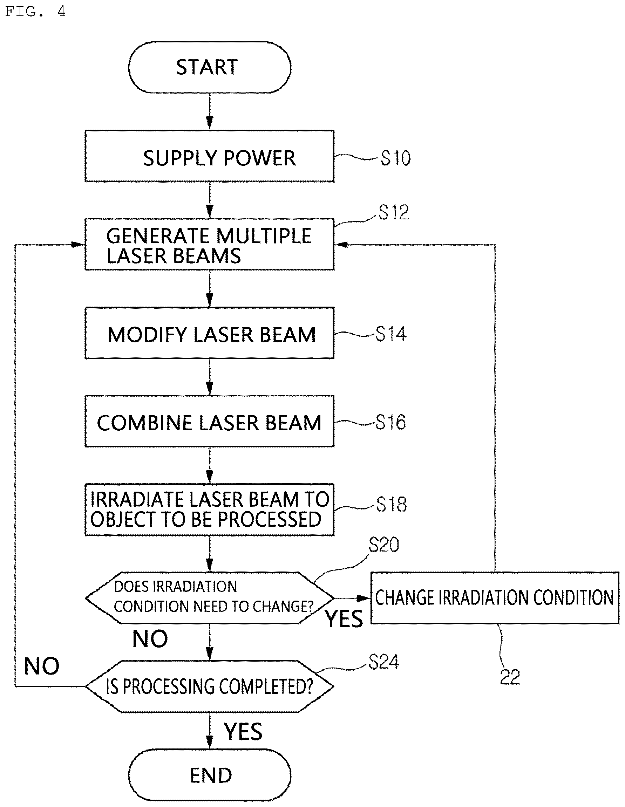

Next, a processing method of a processing apparatus using a plurality of lasers according to a preferred embodiment of the present invention will be described in detail with reference to FIG. 4.

FIG. 4 is a flowchart illustrating step by step a processing method of a processing apparatus using a plurality of lasers according to a preferred embodiment of the present invention.

When the power switch (not shown) provided in the processing apparatus 10 is turned on in step S10 of FIG. 4, a power supply unit (not shown) supplies power to each device provided in the processing apparatus 10.

Then, the control unit 50 loads the driving program stored in the memory 53, initializes each device, and prepares for the processing work.

In this case, when the information on the object to be processed is input from a worker through the input unit (not shown in the drawing), the setting unit 51 of the control unit 50 sets the irradiation conditions of the laser beam according to the processing conditions of object 60 to be processed corresponding to the input information.

In step S12, the signal generator 52 generates a control signal to control the driving of the plurality of laser generators 21 to 23 and the beam modifiers 31 to 34 according to the set irradiation conditions of the laser beam.

Therefore, the first to third laser generators 21 to 23 may generate the first to third laser beams 11 to 13 having different wavelengths according to the control signals.

In step S14, the first to third beam modifiers 31 to 33 each modify the first to third laser beams 11 to 13 according to the control signal.

In step S16, the first to third beam combiners 41 to 43 sequentially receive the first to third laser beams 11 to 13 to combine the fourth laser beams 14 having different diameters and focal lengths at the same center.

In this case, the fourth beam modifier 34 may modify the fourth laser beam 14 according to the control signal from the control unit 50.

The fourth laser beam 14 combined and modified through this process is irradiated to the object 60 to be processed and performs the cutting process on each layer 61 to 63 forming the object 60 to be processed (S18).

In this case, the control unit 50 may monitor the processing state of the object 60 to be processed, which includes images taken of the object 60 to be processed using a camera or results detected using various sensors, and control to change the irradiation conditions of the laser beam in real time according to the monitoring results.

That is, in step S20, the control unit 50 checks whether the irradiation conditions of the laser beam need to be changed as a result of monitoring the processing state of the object 60 to be processed.

When it is necessary to change the irradiation conditions of the laser beam as the check result in step S20, the setting unit 51 changes and sets one or more of the irradiation conditions of the laser beam, that is, the on and off of the laser beam, the output and frequency of the laser beam, and the shape and focus position of the laser beam according to the monitored results, i.e., the processing conditions of the object 60 to be processed (S22).

Then, the signal generation unit 52 generates the control signal according to the irradiation conditions of the laser beam changed and set in the setting unit 51, proceeds to step S12, and repeats the subsequent processes.

Meanwhile, when there is no need to change the irradiation conditions of the laser beam as the check result in step S20, the control unit 50 checks in step S24 whether the processing work of the object 60 to be processed has been completed, and repeatedly performs steps S12 to S24 until the processing work is completed.

On the other hand, when the processing work of object 60 to be processed is completed as the check result in step S24, the control unit 50 stops the driving of each device and ends.

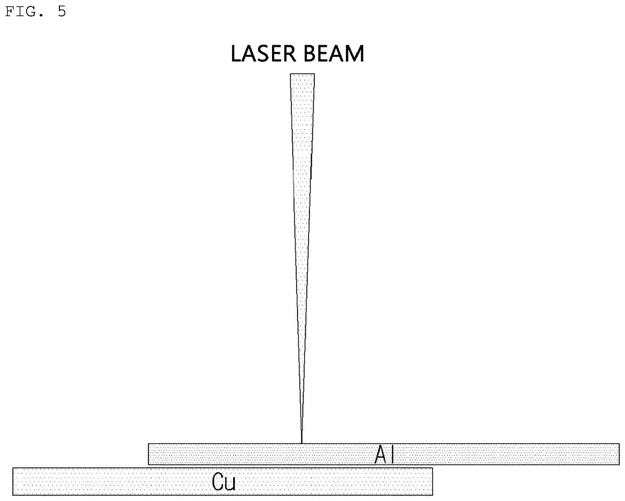

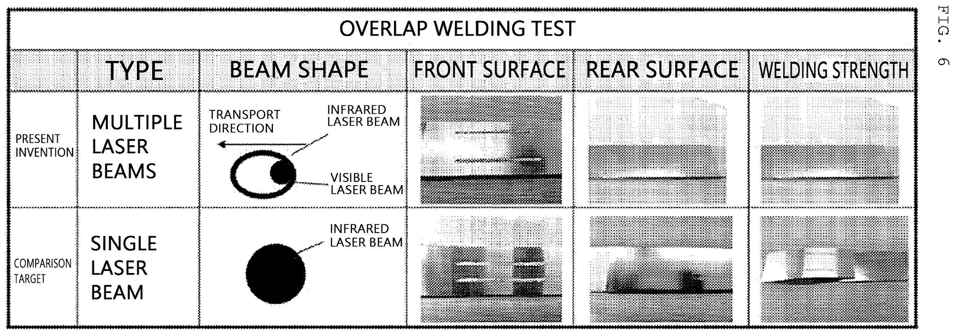

For example, FIG. 5 is an example of a configuration for overlap welding different materials and FIG. 6 is a diagram illustrating results of overlap welding illustrated in FIG. 5.

FIG. 5 illustrates a configuration in which the overlap welding is performed by overlapping aluminum with a thickness of approximately 1 mm and copper with a thickness of approximately 1.5 mm on the upper and lower portions, respectively, and FIG. 6 illustrates the overlap welding results of the comparison target with the present invention.

According to the related art, when using a single laser to overlap base materials made of different materials, namely aluminum and copper, aluminum, which has a low melting point, is easily vaporized, but copper, which has a high melting point, has difficulty melting, resulting in a decrease in quality as a result of the overlap welding.

In other words, in the single laser condition which is the comparison target, the welding is performed under normal welding conditions using an ultraviolet laser beam with an output of about 4 kW, but the welding strength is low, so the overlapping welding base materials are separated from each other, and many sparks are generated during welding, so it was confirmed that product quality deteriorated and a lot of spark particles were generated, which could cause defects in the surrounding area.

On the other hand, according to the above-described embodiment, the optical unit is adjusted to form an infrared laser beam with an output of about 4kW, which is easily absorbed by aluminum, into a ring shape and irradiate the outer part of the welding area to be overlap welded, and when the welding is done by irradiating the inside of the welding area using a visible laser beam with an output of about 2kW, which is easily absorbed by copper, more high-quality overlap welding is possible.

Here, the external laser beam and the internal laser beam may be arranged on the same axis, but the internal laser beam may be arranged at a position shifted to one side on the axis of the external laser beam.

In this way, when the internal laser beam is located behind the external laser beam and the relative transport direction of the object to be processed, the time difference occurs between the upper and lower portions of the welding base material for the overlap welding.

Due to the time difference occurring at the upper and lower portions of the welding base material, the present invention may more effectively perform the overlap welding having different materials.

That is, at the beginning of the welding, by using more than about 70% of the output of the infrared laser beam with an output of about 4 kW, the internal visible laser beam may pass through the aluminum arranged at the upper portion and sufficiently reach the copper arranged at the lower portion.

In the section where the present welding is performed past the initial welding start section, the output of the infrared laser beam is maintained at about 50%, and the visible laser beam is irradiated at an output of about 90% or more, implementing high-strength welding.

In this way, the present invention may perform the processing by irradiating the laser beams having different wavelengths capable of performing welding, cutting, various processing on each layer to the object to be processed in which different materials are stacked.

In particular, the present invention may be used in various processing fields, such as welding heterogeneous metals used in the manufacturing of the secondary battery or cutting electrodes with the active layer of the secondary battery.

Through the process as described above, the present invention may perform the cutting process by irradiating laser beams having different wavelengths capable of cutting each layer to the object to be processed in which different materials are stacked.

The present invention may irradiate the laser beams combined to have different diameters at the same center to simultaneously perform the cutting process on each layer forming the object to be processed, thereby improving the processing speed and improving the precision of the processed surface.

Meanwhile, in the above embodiment, the object to be processed was explained as being cut and processed in a stacked state using different materials, but the present invention is not necessarily limited thereto.

That is, the present invention may be modified to perform not only the cutting process, but also various processing such as the welding and patterning by irradiating the laser beam to the object to be processed.

In particular, the present invention may perform various processing works such as cutting, welding, and patterning, to not only the object to be processed in which different materials are stacked, but also the object to be processed in which the same material is stacked or the single object to be processed with a single layer.

For example, in the case of a metal plate applied to electronic devices, the metal plate reflects about 95% or more of most laser beams, but as described with reference to FIG. 3, depending on the characteristics of the metal plate whose absorbance changes depending on the wavelength, laser beams having a specific wavelength are absorbed by the metal plate, resulting in a high absorption rate. For example, in the case of copper, the absorbance of a laser beam having a green wavelength is the highest.

However, there is a problem in that the laser generator and irradiation device that irradiate the laser beam having a specific wavelength described above are expensive, and it is difficult to produce high output.

Therefore, the present invention enables low-cost and high-quality processing by applying a general laser generator that is relatively inexpensive and capable of realizing high output to a processing device.

In other words, the present invention melts the surface of the metal plate by irradiating the laser beam having a specific wavelength and irradiating a general laser beam having a wavelength absorbed by the metal plate to facilitate processing such as cutting, welding, and patterning.

This is because all metals have a physical phenomenon in which the absorption rate increases to approximately 90% or more for almost all laser beam wavelengths when melted.

Therefore, the present invention may perform a desired processing work by cutting the metal plate with the high reflectance of the laser beam or simultaneously radiating laser beams having different wavelengths to the object to be processed in which the plurality of layers of the same material or different materials are stacked.

That is, the present invention may be changed to lower the reflectance of the laser beam by irradiating the laser beam having a specific wavelength absorbed by the surface of the metal plate to the surface of the metal plate, that is, the object to be processed, radiate the laser beams having different wavelengths absorbed into the inside of the metal plate to heat the surface and inside of the metal plate to cut the object to be processed, and perform the welding processing by melting the object to be processed in which the plurality of layers are stacked.

In addition, according to the present invention, by processing an object to be processed by radiating a surface and inside of the object to be processed with laser beams having different wavelengths to lower a laser beam reflectance and increase an absorption rate, it is possible to improve a processing speed and processing efficiency.

Although the invention made by the present inventor has been described in detail according to the above-described embodiments, the present invention is not limited to the above-described embodiments and, of course, may be changed in various ways without departing from the gist of the invention.

The present invention is applied to the processing apparatus using a plurality of lasers and method technology for performing the process by irradiating the laser beam to the single object to be processed, or the object to be processed in which different materials or the same material are stacked.

## Claims

1. A processing apparatus using a plurality of lasers, comprising:
a plurality of laser generators (21 to 23) that generate multiple laser beams (11 to 13);
a plurality of beam modifiers (31 to 34) that maintain a shape of each laser beam (11 to 13) or modify the shape in real time;
beam combiners (41 to 43) that combine multiple laser beams (11 to 13) modified by the plurality of beam modifiers (31 to 34); and
a control unit (50) that changes an irradiation condition of each laser beam (11 to 13) based on a processing condition of an object (60) to be processed to control driving of each laser generator (21 to 23) and the beam modifier in real time,
wherein the processing condition includes a material of the object (60) to be processed, the number of stacked layers, and result information of monitoring a processing state,
the irradiation condition of the laser beams (11 to 13) includes one or more of an on/off of each laser beam (11 to 13), an output and frequency of each laser beam (11 to 13), and a shape and focus position of each laser beam (11 to 13),
the beam modifiers (31 to 34) include one or more beam modifiers that modify each laser beam (11 to 13) generated from the plurality of laser generators (21 to 23), and
separate beam modifiers (31 to 34) that modify the laser beams (11 to 13) combined by the beam combiner (41 to 43)
to combine the laser beams (11 to 13) having a wavelength absorbed on the surface of the object (60) to be processed and the laser beams (11 to 13) having different wavelengths absorbed inside the object (60) to be processed to have different diameters at the same center or at different centers, and irradiate the combined laser beams (11 to 13) to the object (60) to be processed and heat the surface and inside of the object (60) to be processed to lower a reflectance of the laser beams (11 to 13) and increase an absorption rate of the laser beams (11 to 13) so as to process the object (60) to be processed.

2. The processing apparatus using a plurality of lasers of claim 1, wherein the object (60) to be processed is a single object (60) to be processed having a single layer or an object (60) to be processed having a plurality of layers by stacking different materials or the same material,
the multiple laser beams (11 to 13) are irradiated to an area to be processed the have different diameters at the same center, or
the multiple laser beams (11 to 13) are irradiated to the area to be processed in different shapes at different centers to generate a time difference in irradiation.

3. A processing method of the processing apparatus using a plurality of lasers of claim 1 or 2, comprising:
(a) setting, by a control unit (50), an irradiation condition of laser beams (11 to 13) based on a processing condition of an object (60) to be processed;
(b) generating, by a plurality of laser generators (21 to 23), the multiple laser beams (11 to 13);
(c) modifying, by a plurality of beam modifiers (31 to 34), the multiple laser beams (11 to 13);
(d) combining, by beam combiners (41 to 43), the modified multiple laser beams (11 to 13) and irradiating the combined modified multiple laser beams to the object (60) to be processed to process the object (60) to be processed; and
(e) monitoring, by the control unit (50), a processing state of the object (60) to be processed, and changing the irradiation condition of the laser beam (11 to 13) based on the monitoring result to process the object (60) to be processed,
wherein the processing condition includes a material of the object (60) to be processed, the number of stacked layers, and result information of monitoring a processing state, and
the irradiation condition of the laser beams (11 to 13) includes one or more of an on/off of each laser beam (11 to 13), an output and frequency of each laser beam (11 to 13), and a shape and focus position of each laser beam (11 to 13)
to combine the laser beams (11 to 13) having a wavelength absorbed on the surface of the object (60) to be processed and the laser beams (11 to 13) having different wavelengths absorbed inside the object (60) to be processed to have different diameters at the same center or at different centers, and irradiate the combined laser beams (11 to 13) to the object (60) to be processed and heat the surface and inside of the object (60) to be processed to lower a reflectance of the laser beams (11 to 13) and increase an absorption rate of the laser beams (11 to 13) so as to process the object (60) to be processed.

4. The processing method of claim 3, wherein the object (60) to be processed is a single object (60) to be processed having a single layer or an object (60) to be processed having a plurality of layers by stacking different materials or the same material, and
the multiple laser beams (11 to 13) are irradiated to an area to be processed to have different diameters at the same center, or the multiple laser beams (11 to 13) are irradiated to the area to be processed in different shapes at different centers to generate a time difference in irradiation.
